# EUROPÄISCHE PATENTSCHRIFT

(11) **EP 1 970 487 B1**
(45) Veröffentlichungstag und Bekanntmachung des Hinweises auf die Patenterteilung: **31.08.2011**
(21) Anmeldenummer: 08450018.0
(22) Anmeldetag: 25.02.2008
(51) Int. Cl.: D07B 1/14, D07B 1/16, G02B 6/44, G02B 6/38, D07B 1/08

(54) **Seilbahn-Tragseil**
Funicular support rope
Câble de téléphérique

(30) Priorität: 14.03.2007 AT 1592007 U
(43) Veröffentlichungstag der Anmeldung: 17.09.2008
(73) Patentinhaber: Teufelberger Seil Gesellschaft m.b.H., 4600 Wels (AT)
(72) Erfinder: Leber, Engelbert, 3193 St. Aegyd/NW (AT); Traxl, Robert, 4802 Ebensee (AT)
(74) Vertreter: Sonn & Partner Patentanwälte

(56) Entgegenhaltungen:
- EP-A- 0 060 061
- EP-A- 0 072 594
- EP-A- 0 211 107
- WO-A-00/72071
- WO-A-2005/114285
- DE-A1- 10 129 558
- DE-U1- 29 816 469
- FR-A- 2 633 092
- JP-A- 57 074 705
- US-A- 4 696 542
- US-A- 4 753 500
- US-B1- 6 778 743

## Beschreibung

Die Erfindung betrifft ein als Seilbahn-Tragseil ausgebildetes Drahtseil mit einem Kern, der von zumindest einer äußeren Lage von Seilelementen, nämlich Drähten und/oder Litzen, umgeben ist, und der zumindest einen zur Datenübertragung vorgesehenen Lichtwellenleiter aufweist, der in einem Metallröhrchen eingebettete Glasfasern enthält und der mit zumindest einem Draht zu einem Spiralseil verseilt ist.

Bei einem am Markt angebotenen Seilbahn-Tragseil dieser Gattung liegt als Kern ein Spiralseil vor, in dem Drähte einerseits und zur Datenübertragung vorgesehene Lichtwellenleiter mit Stahlröhrchen, in denen Glasfasern eingebettet sind, andererseits verseilt sind. Dieses Kern-Spiralseil ist bei diesen bekannten Tragseilen sodann von mehreren, z.B. drei oder vier, Lagen von Drähten umgeben, die bereits beim Verseilen sowie später im Betrieb Querbeanspruchungen auf das Kern-Spiralseil und auf die Lichtwellenleiter übertragen. Problematisch ist auch das Verseilen von Drähten oder Litzen mit Lichtwellenleitern, da es hierbei, wenn direkt ein Lichtwellenleiter mitverseilt wird, leicht zu Beschädigungen des Lichtwellenleiters kommen kann. Aber auch im Betrieb können wie erwähnt die den Lichtwellenleiter umgebenden Drähte oder Litzen Drücke auf den Kern mit dem Lichtwellenleiter ausüben oder übertragen, wodurch der Lichtwellenleiter verformt und beschädigt werden kann. Ein weiterer Nachteil dieser bekannten Tragseile mit Lichtwellenleitern liegt darin, dass die die optischen Fasern oder Glasfasern enthaltenden Röhrchen aus Edelstahl mit den unlegierten Seildrähten ein galvanisches Element entsprechend der elektrochemischen Spannungsreihe bilden, so dass eine unerwünschte Korrosion die Folge ist.

Die US 4 936 647 A beschreibt andererseits ein Seil mit hoher Zugfestigkeit, wobei äußere Litzen einen Kern umgeben, der insbesondere durch einen Lichtwellenleiter mit einem Mantel und darin vorgesehenen optischen Fasern gebildet ist. Bei der Herstellung dieses bekannten Seils wird zunächst anstelle des Lichtwellen-leiter-Kerns ein herkömmlicher harter Kerndraht verwendet, um den herum die Litzen geschlagen und anschließend komprimiert werden. Danach wird der Kerndraht aus dem so hergestellten Seil herausgezogen und durch den Lichtwellenleiter ersetzt. Dadurch wird der Lichtwellenleiter bei der Herstellung des Seils nicht beschädigt. Allerdings ist diese bekannte Herstellung, bei der ein zuvor verwendeter harter Drahtkern nach dem Verseilen durch den Lichtwellenleiter ersetzt wird, aufwändig.

Ein andersartiges Drahtseil mit Lichtfaserstrang ist aus der DE 10 2004 009 797 A bekannt; bei diesem bekannten Drahtseil wird eine Licht leitende sowie emittierende Faser am Außenumfang des Drahtseils beispielsweise zwischen zwei Außenlitzen oder aber in einem speziellen Seilelement, das eine Nut für die optische Faser hat, angebracht. Ein ähnliches leuchtendes Seil ist in der EP 1 359 248 A2 geoffenbart. Diese bekannten Drahtseile haben eine Sicherheitsfunktion, wobei sie beispielsweise zum Anhängen von Pistenfahrzeugen gedacht sind, wobei die optische Faser im Betrieb als Leuchtfaser Licht emittiert, so dass das Drahtseil gut sichtbar ist. Für gröbere Belastungen, wie sie etwa im Fall eines Seilbahn-Tragseils anfallen, sind diese bekannten Drahtseile nicht geeignet.

In der DE 101 29 558 A1 ist ein Kabel mit einer Kabelseele geoffenbart, die optische Adern enthält. Im Einzelnen ist hier ein Lichtwellenleiter innerhalb einer Kunststoffhülle vorgesehen, auf der eine Armierung aus einem Metalldraht oder Kunststofffaden aufgewickelt ist, und auf der Armierung ist eine äußere thermoplastische Schicht aufgebracht. Es handelt sich somit hier um ein an sich herkömmliches optisches Kabel, nicht jedoch um ein Drahtseil, bei dem die Seildrähte oder Litzen Drücke auf den Kern ausüben bzw. übertragen.

Ein vergleichbares optisches Nachrichtenkabel, mit einem Lichtwellenleiter, der zusammen mit einem Abstandselement schraubenlinienförmig um ein Zentralelement herum gewickelt ist, und mit äußeren Kusntstoffhüllschichten ist aus der DE 197 21 716 A1 bekannt. Auch hier liegt ein grundsätzlich anderer Aufbau, eben ein Nachrichtenkabel, mit demgemäß unterschiedlichen mechanischen Anforderungen bzw. Beanspruchungen vor, verglichen mit einem Drahtseil, insbesondere Seilbahn-Tragseil.

Dies trifft auch auf das optische Nachrichtenkabel gemäß der EP 72 423 A1 zu, bei dem Lichtwellenleiter um eine Kerntrense verseilt sind; in einem diese umschließenden Kunststoff-Kabelmantel können zugaufnehmende Glasfaserelemente eingebettet sein.

Weiters ist in der WO 00/72071 A ein Seekabel zur Nachrichtenübertragung gezeigt, welches einen Kern mit mehreren Lichtwellenleitern enthält, welche mit Fülldrähten verseilt sind. Als Lichtwellenleiter sind Stahlröhrchen gefüllt mit Fasern sowie einem hydrophoben Material vorgesehen. Der Kern ist mit einer Armierung aus SZ- bzw. Gegenschlag-verseilten Stahldrähten ummantelt, um die Röhrchen vor Beschädigung zu schützen, wobei zwischen dem Kern und der Armierung eine Hülle, beispielsweise ein Polyester-Band, und auf dieser Hülle eine Ummantelung, vorzugsweise aus Polyethylen, vorgesehen sind. Es ist demnach eine zweischichtige Kunststoff-Hülle zwischen dem Kern und der Armierung vorgesehen.

Die US 4,696,542 A offenbart schließlich ein optisches Datenkommunikationskabel zur Ölbohrloch-Vermessung mit einem Kern umfassend eine Vielzahl von miteinander verdrillten Glasfasern, welche in einem elastischen Material wie Silikon eingebettet sind, und einer zweiteiligen Hülle, welche die Glasfasern ummantelt. Auf dem Kern ist dabei eine mehrschichtige Armierung aufgebracht. Lichtwellenleiter mit Metallummantelung sind jedoch nicht vorgesehen.

Es ist nun Aufgabe der Erfindung, ein Drahtseil, nämlich Seilbahn-Tragseil, wie eingangs angegeben zu schaffen, bei dem der oder die Lichtwellenleiter in effizienter Weise gegen mechanische Beanspruchungen und Beschädigungen sowohl während der Herstellung des Seils als auch bei der Benutzung des Seils sichergestellt wird, so dass eine lange Lebensdauer des oder der Lichtwellenleiter und damit des Drahtseils gesichert wird.

Zur Lösung dieser Aufgabe sieht die Erfindung ein Drahtseil wie im Anspruch 1 definiert vor. Vorteilhafte Ausführungsformen und Weiterbildungen sind in den abhängigen Ansprüchen angegeben.

Beim erfindungsgemäßen Drahtseil schützt ein Kunststoffmantel das Kern-Spiralseil mit den Lichtwellenleitern vor verschiedensten Einflüssen, wie etwa vor Beschädigungen durch Querbeanspruchungen von äußeren Drahtlagen und vor Korrosion, wie dies gerade bei Seilbahn-Tragseilen von Bedeutung ist. Im Einzelnen werden die Lichtwellenleiter-Röhrchen durch den Kunststoffmantel gegen Querdrücke im Seil und damit gegen Querbeanspruchung abgeschirmt. Diese Querdrücke rühren einerseits vom Schnürdruck der darüberliegenden Drahtlagen und von der Zugbeanspruchung her, andererseits resultieren sie von Auflagedrücken beim Aufliegen des Seilbahn-Tragseils auf Stützen oder dergl. sowie von Rollendrücken beim Befahren des Tragseils mit Fahrbetriebsmitteln (Gondeln etc.). Beim Einbau des Kunststoffmantels wie angegeben wird eine Übertragung dieser Drücke auf die Lichtwellenleiter-Röhrchen verhindert, so dass auch ein Verschleiß der Metallröhrchen verhindert wird. Damit wird die Lebensdauer der Metallröhrchen der Lichtwellenleiter und somit der Datenübertragung durch die Lichtwellenleiter erhöht und über die gesamte Lebensdauer des Drahtseils gesichert. Weiters ist von Vorteil, dass durch den Kunststoffmantel und den dadurch gegebenen Luftabschluss, wobei weiters auch eine entsprechende Schmierung des Lichtwellenleiter-Spiralseils vorgenommen wird, einer Korrosion zufolge galvanischer Effekte in effizienter Weise entgegengewirkt wird. Ferner werden die Lichtwellenleiter-Röhrchen bereits während der Drahtseilherstellung geschützt, wobei durch den Kunststoffmantel eine Beschädigung der Röhrchen beim Verseilen, wenn die äußeren Drahtlagen aufgebracht werden, verhindert wird. Dadurch ist andererseits ein wesentlich einfacherer Umgang mit dem Kern-Spiralseil, mit den Lichtwellenleitern, und somit auch eine kostengünstigere Fertigung des Drahtseils insgesamt möglich.

Auch bei Herstellung einer Seilendverbindung, nämlich einer Vergussverbindung (z.B. nach ÖNORM EN 13411-4), wenn das Seilbahn-Tragseil in seine Einzeldrähte aufgelöst werden muss, wird eine Schutzfunktion durch den Kunststoffmantel gewährleistet: auf Grund dieser Ummantelung kann das Kern-Spiralseil bei der Herstellung der Vergussverbindung geschlossen bleiben; der Kunststoffmantel bildet beim Eingießen des heißen, flüssigen Vergussmetalls eine thermische Isolierung für die Lichtwellenleiter-Röhrchen und isoliert sie so gegen eine thermische Überbeanspruchung. Noch ein Vorteil des das Kern-Spiralseil umgebenden Kunststoffmantels ist darin zu sehen, dass das Spiralseil als Kabel aus dem Drahtseil bis zur jeweiligen Anstoßstelle, z.B. im Schaltkasten, herausgeführt werden kann, wobei keine Zwischenanschlüsse, wie sie sonst notwendig sind, benötigt werden.

An sich kann einerseits das Kern-Spiralseil und andererseits auch das Drahtseil insgesamt, insbesondere mit mehreren Draht-Lagen außerhalb des Kern-Spiralseils, je nach Anwendungszweck beliebig aufgebaut sein. Zum Verseilen des oder der Lichtwellenleiter mit dem Draht oder den Drähten im Kern ist es aber zweckmäßig, wenn der bzw. jeder Lichtwellenleiter einen Querschnitt aufweist, der im Wesentlichen gleich jenem oder vorzugsweise geringfügig kleiner als jener des oder der mit dem Lichtwellenleiter (den Lichtwellenleitern) verseilten Drahts bzw. Drähte ist. Wenn der Durchmesser der Lichtwellenleiter-Röhrchen etwas kleiner als der Durchmesser oder Querschnitt der Drähte im Kern bemessen ist, dann liegen die Lichtwellenleiter-Röhrchen mit den Lichtwellenleitern innerhalb des von den Drähten des Kern-Spiralseils definierten Hüllkreises, wodurch ein zusätzlicher Schutz gegen radiale Beanspruchungen erzielt wird.

Vorzugsweise werden mehrere, z.B. drei, Lichtwellenleiter mit mehreren, z.B. vier, Drähten (wenn ein Kerndraht vorgesehen ist) zum Kern-Spiralseil verseilt. Besonders bevorzugt werden gleich viele Lichtwellenleiter und Drähte um einen zusätzlichen Kerndraht herum verseilt, so dass um den Kerndraht herum eine Lage mit abwechselnd jeweils einem Lichtwellenleiter, einem Draht, einem Lichtwellenleiter usw. gebildet wird. Vorzugsweise besteht weiters der bzw. jeder Draht des Kern-Spiralseils aus Stahl. In entsprechender Weise besteht bevorzugt das bzw. jedes Lichtwellenleiter-Röhrchen aus Stahl, insbesondere Edelstahl.

Der Kunststoffmantel kann andererseits aus Polypropylen, wie dies besonders bevorzugt wird, aber auch vorzugsweise aus Polyethylen oder Polyamid bestehen.

Außerhalb des Kunststoffmantels können wie erwähnt mehrere Lagen von Drähten angeordnet sein, und weiters ist es auch für die Ausbildung als Seilbahn-Tragseil günstig, wenn zumindest eine äußerste Lage des Drahtseils aus Profildrähten gebildet ist.

Wie bereits vorstehend erwähnt bringt der erfindungsgemäß vorgesehene Kunststoffmantel auch einen Vorteil bei der Herstellung eines Vergusses an einem Seilende im Hinblick auf seine Wärmedämmwirkung, und eine entsprechende Ausführungsform des erfindungsgemäßen Drahtseils ist demgemäß gekennzeichnet durch einen endseitigen Verguss unter Zwischenlage eines hitzebeständigen Rohrs zwischen dem Kunststoffmantel des Kern-Spiralseils und den äußeren, besenartig aufgespreizten Seilelementen.

Die Erfindung wird nachfolgend anhand von in der Zeichnung dargestellten bevorzugten Ausführungsbeispielen, auf die sie jedoch nicht beschränkt sein soll, noch weiter erläutert. Im Einzelnen zeigen in der Zeichnung:
Fig. 1 eine schaubildliche, stufenweise aufgebrochene Darstellung eines Drahtseils gemäß einer ersten Ausführungsform der Erfindung;
Fig. 2 einen Querschnitt eines vergleichbaren, jedoch eine Drahtlage weniger aufweisenden Drahtseils; und
Fig. 3 schematisch eine Anordnung zum Herstellen einer Vergussverbindung an einem Ende eines Drahtseils gemäß der vorliegenden Erfindung.

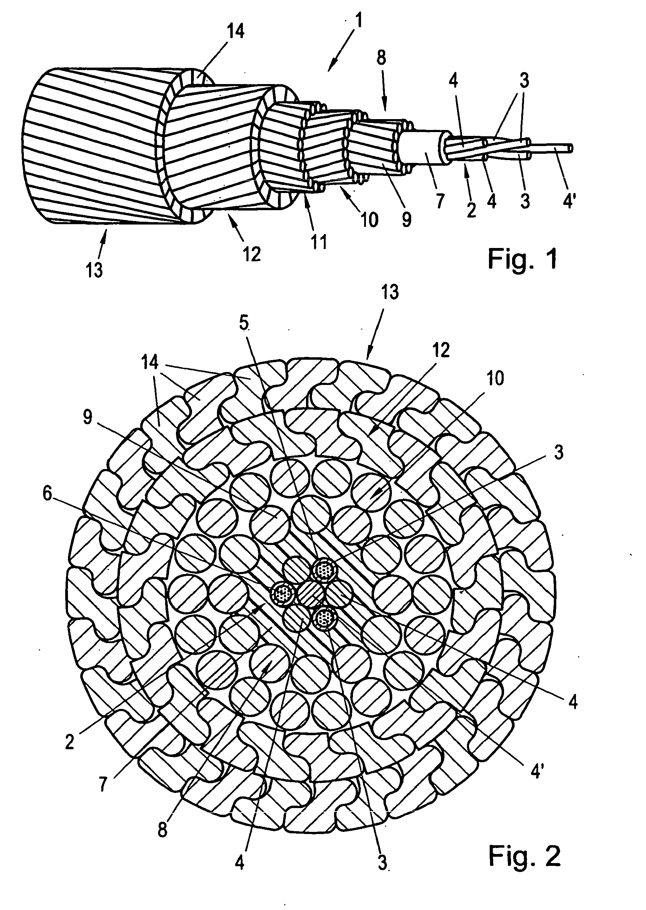

Das in Fig. 1 schaubildlich dargestellte Drahtseil 1 weist einen Kern in Form eines Spiralseils 2 auf, welches aus Lichtwellenleitern 3 einerseits und Stahldrähten 4 andererseits besteht, die um einen Kern-Draht 4' herum verseilt sind, vgl. hierzu auch die Darstellung in Fig. 2. Die Lichtwellenleiter 3 weisen jeweils ein Röhrchen 5, bevorzugt aus Stahl, insbesondere Edelstahl, auf, in dessen Innerem die Glasfasern 6 für die Lichtübertragung, insbesondere zur optischen Datenübertragung, enthalten sind. Derartige Lichtwellenleiter 3 sind an sich bekannt und bedürfen hier keiner weiteren Erläuterung. Die Edelstahl-Röhrchen 5 haben beim Verseilen zur Herstellung des Kern-Spiralseils 2 die Funktion der Drähte 4, und sie werden gemeinsam mit diesen Drähten 4 verseilt. Es sei hier erwähnt, dass an sich derartige Spiralseile auch bereits als Erdseile verwendet werden, wobei z.B. die Drähte aus Aluminium bestehen.

Das Kern-Spiralseil 2 ist im vorliegenden Drahtseil 1 von einem Kunststoffmantel 7 umgeben, der beispielsweise auf das Kern-Spiralseil aufextrudiert wird und vergleichsweise weich und elastisch verformbar ist. Wie insbesondere aus Fig. 2 ersichtlich ist, kann daher beim Aufbringen der äußeren Lagen des Drahtseils, nämlich insbesondere der nächsten Drahtlage 8, bestehend aus beispielsweise runden Stahldrähten 9, insoweit eine Verformung des Kunststoffmantels 7 herbeigeführt werden, als der Kunststoff des Kunststoffmantels 7 teilweise zwischen die Drähte 9 dieser Lage 8 eindringt, so dass die Drähte 9 dieser Lage 8 nicht gegeneinander scheuern können. Gegebenenfalls kann hier auch ein Thermoplastmaterial für den Kunststoffmantel 7 eingesetzt werden, wobei der Kunststoffmantel 7 im Zuge der Aufbringung der Lage 8 von Drähten 9 bis zur Plastifizierungstemperatur (Erweichungstemperatur) erwärmt wird, um so ein plastisches Deformieren, d.h. Fließen, des Kunststoffmaterials zur Erzielung des beschriebenen Reibungsschutzes zwischen den einzelnen Drähten 9 der innersten Drahtlage 8 zu erhalten.

Je nach Zielvorstellung und Verwendungszweck des Drahtseils 1 werden dann weitere Draht-Lagen durch Verseilen aufgebracht, vgl. die Lagen 10, 11, 12 und 13 gemäß Fig. 1. Die einzelnen Drähte dieser Lagen können dabei von Lage zu Lage jeweils entgegengesetzt verdreht oder verseilt werden, wie dies ebenfalls aus Fig. 1 ersichtlich ist. Weiters kann zumindest die äußerste Lage 13 aus Profildrähten 14 aufgebaut werden, wobei im Beispiel gemäß Fig. 1 ebenso wie in jenem gemäß Fig. 2 die beiden äußeren Lagen 12, 13 aus derartigen Profildrähten 14 aufgebaut sind.

Im Ausführungsbeispiel gemäß Fig. 2 ist im Vergleich zu jenem in Fig. 1 eine innere Lage aus Runddrähten, z.B. die Lage 11, weggelassen. Selbstverständlich können aber auch andere Konstruktionen, mit noch mehr oder mit weniger Draht-Lagen 8 etc., vorgesehen werden.

Der Kunststoffmantel 7 besteht bevorzugt aus Polypropylen, er kann jedoch vielfach mit gleichem Vorteil auch aus Polyamid oder aber aus Polyethylen (HDPE, LDPE) hergestellt sein. Selbstverständlich sind auch andere Kunststoffe möglich, sofern sie die gewünschte Dämpfungs- und Schutzwirkung sowie die entsprechende Beständigkeit aufweisen. chende Beständigkeit aufweisen.

Das vorliegende Drahtseil ist zur Verwendung als stehendes Tragseil für Seilbahnen vorgesehen, vorzugsweise wie vorstehend beschrieben in voll verschlossener Ausführung und mit mehreren Lichtwellenleitern zur Datenübertragung.

Der Kunststoffmantel 7 kann auch durch Aufwickeln eines Kunststoffbandes in mehreren Lagen auf das Kern-Spiralseil 2 (anstatt durch Aufextrudieren) hergestellt werden, wobei es im Fall der Verwendung eines thermoplastischen Materials auch weiterhin denkbar ist, nach Aufwicklung des Bandes durch einen Heizvorgang ein Verschmelzen der einzelnen Bandlagen des Kunststoffmaterials herbeizuführen. Auch in diesem Fall wird die vorstehend ausführlich erläuterte Schutzwirkung des Kunststoffmantels 7 für die Lichtwellenleiter 3 hinsichtlich Vermeiden der Druckübertragung auf die Lichtwellenleiter, hinsichtlich Korrosionsbeständigkeit etc. erzielt.

Überdies sollte selbstverständlich sein, dass im Kern-Spiralseil 2 auch weniger oder aber mehr als drei Lichtwellenleiter 3 und mehr oder weniger Kern-Drähte 4 bzw. 4' verseilt werden können.

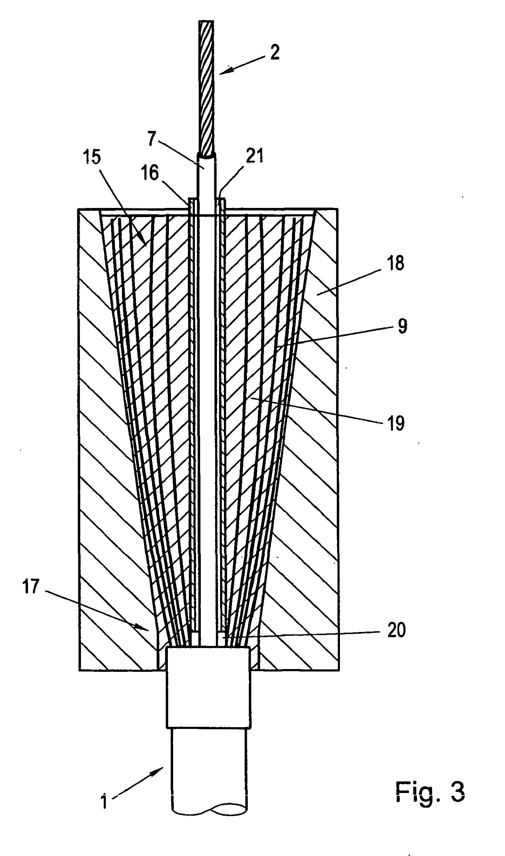

In Fig. 3 ist eine Anordnung mit einem Verguss des vorliegenden Drahtseils 1 an einem Ende, beispielsweise grundsätzlich entsprechend der ÖNORM EN 13411-4, veranschaulicht. Vergüsse nach dieser Norm können sowohl mit Kunstharz als auch mit einer Metalllegierung hergestellt werden. Als Metalllegierungen kommen beispielsweise Zn/Pb oder Sn/Pb in Frage. Derartige Vergüsse waren bisher bei Drahtseilen mit Lichtwellenleitern problematisch, insbesondere war ein Vergießen mit Metalllegierungen nicht möglich, da die dabei gegebenen höheren Temperaturen Schäden an den Lichtwellenleitern verursachen konnten.

Wie im Einzelnen aus Fig. 3 ersichtlich ist, wird wie üblich bei Vergüssen das Drahtseil 1 endseitig in Einzeldrähte aufgelöst, so dass ein sog. "Seilbesen" erhalten wird, wie er in Fig. 3 schematisch bei 15 veranschaulicht ist. Dieser Seilbesen 15 besteht somit aus den aufgefächerten Seilelementen bzw. Drähten 9 der Lagen 8, 10, 11, 12 und 13 (s. Fig. 1 und 2). Über das Kernseil 2 und dessen Kunststoffmantel 7 wird im Zuge des Vergusses ein Rohr 16 geschoben, welches aus einem hitzebeständigen Material besteht, wie etwa aus Stahl, Kupfer, Messing oder aus ist derart bemessen, dass es bis in den Wurzelbereich 17 des Vergusses hineinreicht und fest im "Seilbesen" 15 fixiert wird, wobei ein für das verwendete Vergussmetall praktisch dichter Abschluss erzielt wird. Für den Verguss wird ein übliches Werkzeug, eine sog. Vergussmuffe 18, verwendet, das bzw. die mit einer konischen Öffnung für den "Seilbesen" 15 und für das Vergießen versehen ist. Der so vorbereitete Vergusskegel wird mit einem erhitzten, flüssigen Material, insbesondere Metall, ausgegossen, wie dies in Fig. 3 bei 19 veranschaulicht ist. Durch die Viskosität des Vergussmetalls und den festen Sitz des Rohrs 16 im Wurzelbereich 17 des Besens 15 wird erreicht, dass das Vergussmetall nicht von der Unterseite her in das Innere des Rohrs 16 eindringen kann, so dass es auch nicht in Berührung mit dem Kunststoffmantel 7 kommt. Unterhalb des Rohrs 16 ergibt sich somit im Zentrum des Vergusses 19 ein kleiner Hohlraum 20. Das Rohr 16 steht weiters an der Oberseite etwas über die Vergussmuffe 18 vor, so dass auch von oben kein flüssiges Metall in das Innere des Rohrs 16 eindringen kann.

Das Rohr 16 umgibt, wie ebenfalls aus Fig. 3 ersichtlich ist, den Kunststoffmantel 7 mit einem Luftspalt 21, und dieser Luftspalt 21 sowie der Kunststoffmantel 7 bilden eine Wärmedämmung bzw. Isolierung, die ausreicht, dass im Kernseil 2 und insbesondere in den dort vorhandenen Lichtwellenleitern (3 in Fig. 1 und 2) eine thermische Überbeanspruchung vermieden werden kann.

In Tests wurde die Haltbarkeit des Vergusses wie in Fig. 3 veranschaulicht durch Zugprüfungen nachgewiesen, wobei parallele Messungen auch die Funktion der Lichtwellenleiter erwiesen haben. Die Lichtwellenleiter wurden sodann auch bei Testinstallationen entsprechend Seilbahnen als funktionsfähig festgestellt.

## Patentansprüche

1. Als Seilbahn-Tragseil ausgebildetes Drahtseil (1), mit einem Kern, der von zumindest einer äußeren Lage (8, 10-13) von Seilelementen (9), nämlich Drähten und/oder Litzen, umgeben ist, und der zumindest einen zur Datenübertragung vorgesehenen Lichtwellenleiter (3) aufweist, der in einem Metallröhrchen (5) eingebettete Glasfasern (6) enthält und der mit zumindest einem Draht (4, 4')zu einem Spiralseil (2) verseilt ist, **dadurch gekennzeichnet, dass** das Kern-Spiralseil (2) von einem Kunststoffmantel (7) umgeben ist, der eine Schutzhülle gegenüber der zumindest einen äußeren Seilelemente-Lage (8, 10-13) bildet.

2. Drahtseil nach Anspruch 1, **dadurch gekennzeichnet, dass** der Kunststoffmantel (7) aus Polypropylen besteht.

3. Drahtseil nach Anspruch 1, **dadurch gekennzeichnet, dass** der Kunststoffmantel (7) aus Polyethylen besteht.

4. Drahtseil nach Anspruch 1, **dadurch gekennzeichnet, dass** der Kunststoffmantel (7) aus Polyamid besteht.

5. Drahtseil nach einem der Ansprüche 1 bis 4, **dadurch gekennzeichnet, dass** das Lichtwellenleiter-Röhrchen (5) einen Querschnitt aufweist, der im Wesentlichen gleich dem Querschnitt oder vorzugsweise etwas kleiner als der Querschnitt des mit dem Lichtwellenleiter verseilten Drahts (4) ist.

6. Drahtseil nach einem der Ansprüche 1 bis 5, **dadurch gekennzeichnet, dass** mehrere, z.B. drei, Lichtwellenleiter (3) mit mehreren, z.B. vier, Drähten (4, 4') verseilt sind.

7. Drahtseil nach Anspruch 6, **dadurch gekennzeichnet, dass** die Lichtwellenleiter (3) mit gleich vielen äußeren Drähten (4) und mit einem Kerndraht (4') verseilt sind.

8. Drahtseil nach einem der Ansprüche 1 bis 7, **dadurch gekennzeichnet, dass** der Draht oder die Drähte (4, 4') des Kern-Spiralseils (2) aus Stahl besteht bzw. bestehen.

9. Drahtseil nach einem der Ansprüche 1 bis 8, **dadurch gekennzeichnet, dass** außerhalb des Kunststoffmantels (7) mehrere Lagen (8, 10-13) von Drähten (9) angeordnet sind.

10. Drahtseil nach einem der Ansprüche 1 bis 9, **dadurch gekennzeichnet, dass** die bzw. zumindest eine äußere Lage (12, 13) aus Profildrähten gebildet ist.

11. Drahtseil nach einem der Ansprüche 1 bis 10, **dadurch gekennzeichnet, dass** das Lichtwellenleiter-Röhrchen (5) aus Stahl, vorzugsweise aus Edelstahl, besteht.

12. Drahtseil nach einem der Ansprüche 1 bis 11, **gekennzeichnet durch** einen endseitigen Verguss unter Zwischenlage eines hitzebeständigen Rohrs (16) zwischen dem Kunststoffmantel (7) des Kern-Spiralseils (2) und den äußeren, besenartig aufgespreizten Seilelementen (9).

## Claims

1. A wire rope (1) designed as a ropeway track rope and having a core that is surrounded by at least one outer layer (8, 10-13) of rope elements (9), namely wires and/or strands, and includes at least one optical waveguide (3) provided for data transmission, which optical waveguide contains glass fibers (6) embedded in a metal tube (5) and is stranded with at least one wire (4, 4') to a spiral rope (2), **characterized in that** the core spiral rope (2) is surrounded by a plastic jacket (7) forming a protective sheathing relative to the at least one outer rope element layer (8, 10-13).

2. The wire rope according to claim 1, **characterized in that** the plastic jacket (7) is made of polypropylene.

3. The wire rope according to claim 1, **characterized in that** the plastic jacket (7) is made of polyethylene.

4. The wire rope according to claim 1, **characterized in that** the plastic jacket (7) is made of polyamide.

5. The wire rope according to any one of claims 1 to 4, **characterized in that** the optical fiber tube (5) has a cross section that is substantially equal to, or preferably slightly smaller than, the cross section of the wire (4) stranded with the optical fiber.

6. The wire rope according to any one of claims 1 to 5, **characterized in that** several, e.g. three, optical fibers (3) are stranded with several, e.g. four, wires (4, 4').

7. The wire rope according to claim 6, **characterized in that** the optical fibers (3) are stranded with an equal number of outer wires (4) and a core wire (4').

8. The wire rope according to any one of claims 1 to 7, **characterized in that** the wire or wires (4, 4') of the core spiral rope (2) is/are made of steel.

9. The wire rope according to any one of claims 1 to 8, **characterized in that** several layers (8, 10-13) of wires (9) are arranged outside the plastic jacket (7).

10. The wire rope according to any one of claims 1 to 9, **characterized in that** the, or the at least one, outer layer (12, 13) is formed by shaped wires.

11. The wire rope according to any one of claims 1 to 10, **characterized in that** the optical fiber tube (5) is made of steel, preferably stainless steel.

12. The wire rope according to any one of claims 1 to 11 **characterized by** an end-side grouting, with the interposition of a heat-resistant tube (16) between the plastic jacket (7) of the core spiral rope (2) and the outer rope elements (9), which are spread in a broom-like manner.

## Revendications

1. Câble métallique ou câble d'acier (1) réalisé sous forme de câble porteur de téléphérique ou de système de transport aérien par câble, comprenant une âme qui est entourée d'au moins une couche extérieure (8, 10-13) d'éléments de câble (9), à savoir des fils métalliques et/ou des torons, et présente au moins un guide d'ondes lumineuses ou fibre optique (3) prévu pour la transmission de données, renfermant des fibres de verre (6) logées dans un petit tube métallique (5), et toronné avec au moins un fil métallique (4, 4') en un câble spiralé ou câble tors (2), **caractérisé en ce que** le câble spiralé d'âme (2) est entouré d'une enveloppe de matière plastique (7), qui forme une gaine de protection par rapport à ladite au moins une couche extérieure d'éléments de câble (8, 10-13).

2. Câble métallique selon la revendication 1, **caractérisé en ce que** l'enveloppe de matière plastique (7) est réalisée en polypropylène.

3. Câble métallique selon la revendication 1, **caractérisé en ce que** l'enveloppe de matière plastique (7) est réalisée en polyéthylène.

4. Câble métallique selon la revendication 1, **caractérisé en ce que** l'enveloppe de matière plastique (7) est réalisée en polyamide.

5. Câble métallique selon l'une des revendications 1 à 4, **caractérisé en ce que** le petit tube de guide d'ondes lumineuses (5) présente une section transversale, qui est sensiblement égale à la section transversale ou de préférence un peu plus petite que la section transversale du fil métallique (4) toronné avec le guide d'ondes lumineuses.

6. Câble métallique selon l'une des revendications 1 à 5, **caractérisé en ce que** plusieurs, par exemple trois, guides d'ondes lumineuses (3) sont toronnés avec plusieurs, par exemple quatre, fils métalliques (4, 4').

7. Câble métallique selon la revendication 6, **caractérisé en ce que** les guides d'ondes lumineuses (3) sont toronnés avec un même nombre de fils métalliques extérieurs (4) et avec un fil métallique d'âme (4').

8. Câble métallique selon l'une des revendications 1 à 7, **caractérisé en ce que** le fil métallique ou les fils métalliques (4, 4') du câble spiralé d'âme (2) est ou respectivement sont en acier.

9. Câble métallique selon l'une des revendications 1 à 8, **caractérisé en ce qu'**à l'extérieur de l'enveloppe de matière plastique (7) sont agencées plusieurs couches (8, 10-13) de fils métalliques (9).

10. Câble métallique selon l'une des revendications 1 à 9, **caractérisé en ce que** la ou au moins une couche extérieure (12, 13) est formée de fils métalliques profilés.

11. Câble métallique selon l'une des revendications 1 à 10, **caractérisé en ce que** le petit tube de guide d'ondes lumineuses (5) est réalisé en acier, de préférence de l'acier spécial surfin.

12. Câble métallique selon l'une des revendications 1 à 11, **caractérisé par** un culottage d'extrémité avec interposition d'un tube réfractaire (16) entre l'enveloppe de matière plastique (7) du câble spiralé d'âme (2) et les éléments de câble extérieurs (9) ayant été évasés en forme de balai.
